# EUROPEAN PATENT APPLICATION

(11) **EP 4 589 038 A1**
(43) Date of publication of application: **23.07.2025**
(21) Application number: 24223655.2
(22) Date of filing: 30.12.2024
(51) Int. Cl.: C22C 21/02, C22F 1/043, B22D 11/00, B22D 11/06, F16C 33/12

(54) **SLIDING MATERIAL**

(30) Priority: 19.01.2024 JP 2024007049
(71) Applicant: Daido Metal Company Ltd., Nagoya-shi, Aichi 460-0008 (JP)
(72) Inventor: IDE, Atsuko, Inuyama-shi, Aichi 484-0061 (JP); TSUJIMOTO, Kentaro, Inuyama-shi, Aichi 484-0061 (JP)
(74) Representative: Winter, Brandl - Partnerschaft mbB

(57) **Abstract**

A sliding material of the present invention includes an aluminum alloy added with Si, the sliding material having undergone annealing for the aluminum alloy, in which an amount of Si added is in a range from 7.0 to 12.6 mass%, and a Si-rich region having a Si concentration of 17 mass% or more present in a field of view of observation of the aluminum alloy accounts for 5% or more in area ratio.

## Description

### BACKGROUND OF THE INVENTION

### Field of the Invention

The present invention relates to an improvement of a sliding material, in particular of a sliding material made of an aluminum alloy.

### Description of Related Art

The uppermost layer (sliding layer) of a sliding member such as an automotive bearing is formed of a sliding material made of a soft metal in some cases, and as such a sliding material, there has been proposed a material in which silicon (Si) is added to an aluminum (Al) alloy that contains tin (Sn) (See JP S58-67841 A1).

In general, Si is added to an aluminum alloy in order to improve its wear resistance, and Sn is added thereto in order to impart a comformability.

A Si-containing region in an aluminum alloy is a region harder than other regions in the aluminum alloy. This region smoothens protrusions on a rotational shaft when this region comes into contact with the rotational shaft, and the wear of an aluminum alloy is avoided when this region contacts with the rotational shaft, and hence Si can be said to contribute to so-called wear resistance.

In order to improve fuel efficiency in internal combustion engines in recent years, engine start-up and shutdown such as start-stop take place frequently. An oil film breakage of engine oil may occur at the time when the engine is shut down, and a solid-to-solid contact occurs between the rotational shaft and a bearing, and hence the wear resistance of the bearing's sliding surface is needed. As described above, a large content of Si typically enhances the wear resistance.

Please also refer to JP 2014-196813 A, JP 5437703 B, JP 2010-280980 A, JP 2012-246945 A, and JP 4072132 B, which are related to the present invention.

### SUMMARY OF THE INVENTION

When a sliding layer is formed of a sliding material made of an aluminum alloy in which an amount of Si added is merely increased for the purpose of improving the wear resistance, the following problems arise.

Si added to the aluminum alloy is not homogeneously mixed in solid state in the aluminum alloy, and there are scattered regions having a comparatively high Si concentration with a nucleus of Si phase precipitated in the aluminum alloy. Here, when an amount of Si added to the aluminum alloy is too large, such regions having a comparatively high Si concentration make up a large percentage of the area. The region having a comparatively high Si concentration is relatively harder than other regions, but there is a concern of cracks initiated in this harder region having a high Si concentration when an unexpected external force is applied to the sliding layer and consequently cracks occur in the sliding layer.

In other words, when adding Si to the aluminum alloy used for the sliding material, there has been a need to control the trade-off between wear resistance and crack suppression so that the sliding characteristics of the sliding layer formed of the sliding material is satisfied.

As a result of intensive studies to solve the above-mentioned problems, the present inventors have found that wear resistance and crack suppression can be optimized by adjusting not only the amount of Si added but also a region having a comparatively high Si concentration in the aluminum alloy.

A sliding material including an aluminum alloy added with Si, the sliding material having undergone annealing for the aluminum alloy, wherein
the amount of Si added is 7.0 to 12.6 mass%, and
a Si-rich region having a Si concentration of 17 mass% or more present in a field of view of observation of the aluminum alloy accounts for 5% or more in area ratio.

The sliding material of a first aspect defined as described above has excellent sliding characteristics such as wear resistance and crack suppression preservation when forming a sliding layer used in automotive bearing application, for example.

The amount of Si added is preferably in a range from 7.0 to 12.6 mass%. When the amount of Si added is within a range set forth above, a sliding material can be ensured to have suitable hardness and wear resistance. When the content is more than 12.6 mass%, the aluminum alloy is susceptible to cracking.

The reason why the Si concentration in the Si-rich region in the aluminum alloy is defined to be 17 mass% or more is below.

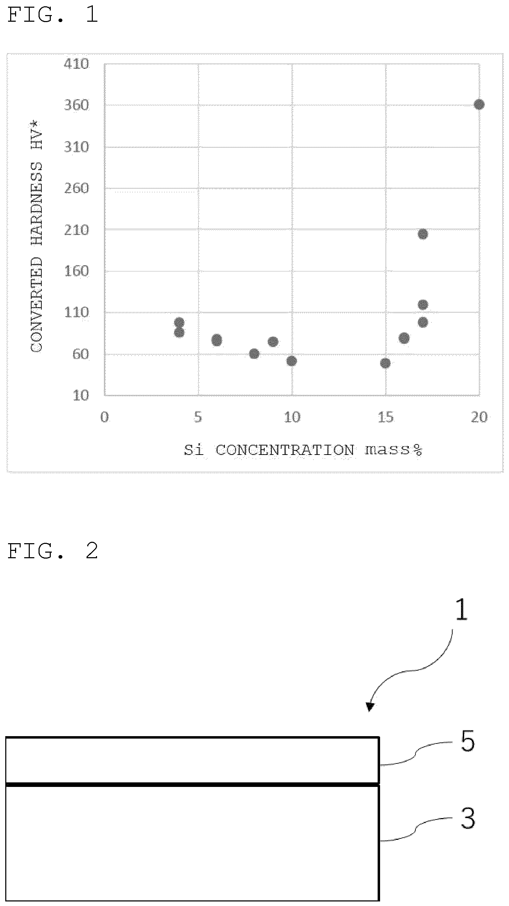

FIG. 1 shows the relationship between the Si concentration (in mass%, the same applies hereinafter.) and its hardness.

It can be seen from the results of FIG. 1 that the hardness increases dramatically when the Si concentration becomes more than 17 mass%.

Note that, the graph of FIG. 1 is from a sample that has been prepared in a way that a molten metal of an aluminum alloy added with Si at a concentration of 8 mass% was casted into a plate shape in the same manner as in Examples described later, underwent a rolling process, and then annealed under the conditions of 500°C × 8 hours in a hot air drying furnace, and the hardness HV on the vertical axis of the cross section of the sample was measured by a nanoindenter (model number DUH-211S available from SHIMADZU CORPORATION), and the Si concentration on the horizontal axis was analyzed by an electronic probe microanalyzer (EPMA) (model number JXA-8530F available from JEOL Ltd.).

When the percentage of the region having a Si concentration of 17 mass% or more, that is, the percentage of the Si-rich region in the aluminum alloy is adjusted to 5% or more in area ratio, an adequate wear resistance can be imparted to the sliding material.

The upper limit of the area ratio of the Si-rich region having a Si concentration of 17 mass% or more is to be defined by the amount of Si added and the annealing conditions, and for example, when the annealing conditions are in a range from 430 to 570°C and from 5 to 10 hours and the amount of Si added is in a range from 7.0 to 12.6 mass%, the upper limit of the area ratio of the Si-rich region is 25% in area ratio.

A method for measuring the area ratio of the region having a Si concentration of 17 mass% or more will be described later.

It has been traditionally known that addition of Sn to aluminum alloys is preferable for ensuring the conformability of the sliding material, but according to the studies of the present inventors, it has been found that when Sn is added to an aluminum alloy, the precipitation of Si tends to be promoted when the aluminum alloy is annealed. In other words, even if the energy consumption in an annealing step is reduced and the manufacturing cost is suppressed, the area ratio of the Si-rich region having a Si concentration of 17 mass% or more can be adequately obtained.

However, in the sliding material defined in the first aspect, the amount of Sn added is preferably 6 mass% or less.

When the amount of Sn added is adjusted to 6 mass% or less, the sliding material has a desired hardness and can preserve wear resistance. Furthermore, cracking can also be suppressed.

Next, a manufacturing method suitable for obtaining the sliding material of the first aspect described above will be described.

For the sliding material defined in the first aspect, the area ratio of the hard Si-rich region is defined.

The area of the Si-rich region in the Si-containing aluminum alloy depends on the amount of Si in the aluminum alloy, an annealing condition, etc.

According to the studies of the present inventors, the sliding material defined in the first aspect can be obtained by the following manufacturing method.

A manufacturing method of sliding material comprising:
a preparation step of providing a molten metal of an aluminum alloy comprising Si added in an amount ranging from 7.0 to 12.6 mass%;
a casting step of casting a plate-shaped workpiece from the molten metal;
a rolling step of rolling the plate-shaped workpiece; and
an annealing step of annealing the rolled workpiece,
wherein a Si-rich region having a Si concentration of 17 mass% or more is adjusted to 5% or more in area ratio in the annealing step.

In the above-mentioned manufacturing method, the conditions of annealing can be appropriately adjusted according to material properties, an annealing environment, etc., but according to the studies of the present inventors, the annealing temperature is preferably in a range from 430°C to 570°C.

### BRIEF DESCRIPTION OF THE DRAWINGS

FIG. 1 is a graph showing a relationship between Si concentration and hardness of an aluminum alloy;
FIG. 2 is a cross-sectional view of a sliding member according to an embodiment of the present invention; and
FIGS. 3A1 to 3B2 each show a distribution of a Si-rich region in a cross section of a sliding material according to an embodiment of the present invention.

### DETAILED DESCRIPTION OF PREFERRED EMBODIMENTS

FIG. 2 shows a cross section of a sliding member 1 according to an embodiment of the present invention. This sliding member 1 has a configuration in which a sliding layer 5 is layered on the top surface of a back metal layer 3. The back metal layer 3 is formed of a general-purpose steel material, and the sliding layer 5 is a Si-containing aluminum alloy. An interlayer made of aluminum may be interposed between the back metal layer 3 and the sliding layer 5.

The back metal layer 3 and the sliding layer 5 are each provided in a flat plate state and are pressed against each other, and then heat treated, followed by machining into a cylindrical shape or a semi-cylindrical shape to form a bearing (a sliding member).

The sliding member 1 is manufactured through a casting step, a rolling step, and an annealing step.

In the casting step, a molten metal (at 700 to 900°C) of an aluminum alloy that contains Si at a concentration of 7.0 to 12.6 mass% or of the aluminum alloy that further contains Sn is provided, and the molten metal is casted into a plate shape.

A roll caster method can be employed in this casting. The roll caster as a casting machine includes a pair of rollers, a molten metal feed nozzle that feeds the molten metal of the aluminum alloy into between the rollers, and a cooling device that cools the pair of rollers.

In this example, the molten metal of the aluminum alloy was cooled by the pair of rollers at a rate of 80 to 130°C/sec to afford a billet (workpiece) having a thickness of about 6 mm.

The distribution of the Si concentration in the workpiece was obtained as follows.

The Si concentration is a concentration value obtained when area analysis is conducted by using an electronic probe microanalyzer (EPMA) for a field of view at 2000x magnification by observing a cross section of the workpiece in a range of 45 µm × 45 µm (200 × 200 pixels). The analysis conditions are below.
Analyzer: FE-EPMA (JXA-8530F available from JEOL Ltd.)
Analysis method: Area analysis using WDS
Field of view of observation: 45 um × 45 um (200 × 200 pixels)
Probe diameter: 40 nm to 1000 nm (appropriately selected depending on the sample and the measurement settings, and measurements are conducted with the same probe diameter when there are multiple samples.)
Elements analyzed (crystallite used): Al(TAP), Sn(PETH), Fe(LIF), Cu(TAPH), Si(TAP)
Crystallite used: ↑
Accelerating voltage: 15 kV
Illumination current: 3 × 10⁻⁸A
Scanning direction: Unidirectional Scanning

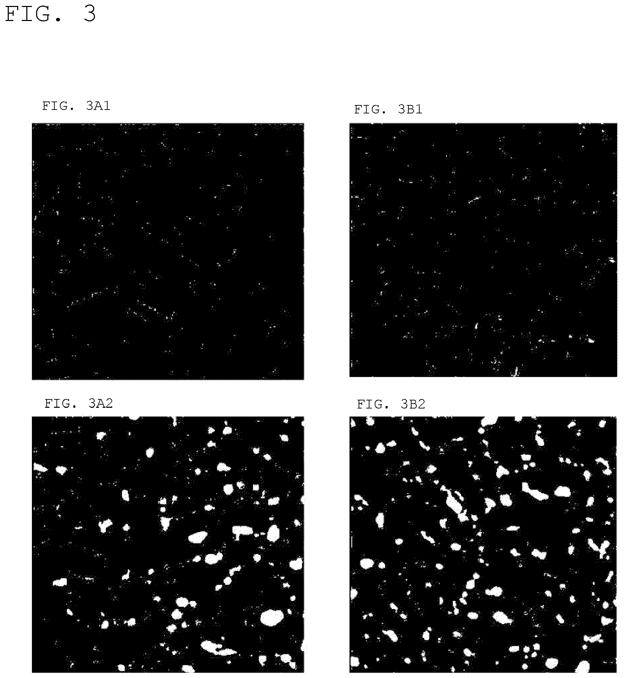

In the area analysis result obtained by the EPMA, the concentration for each analysis element is expressed by the hue for each element, but the hue range for each concentration is set to allow relative comparison of concentration of each element, and image thresholding is performed by using the results of the Si concentration. In the image thresholding, the threshold is determined to differentiate a region having a Si concentration of 17 mass% or more from the other region. In the example of FIGS. 3A1 to 3B2, the region having a Si concentration of 17 mass% or more is represented in white.

The image underwent the thresholding is subjected to grain size analysis to measure the area ratio of the region selected by image thresholding (the region having a Si concentration of 17 mass% or more). For the image thresholding and the grain size analysis, an analysis application version 3.8.0.0 of LASER MICROSCOPE available from KEYENCE was used.

The cross section of the workpiece after the casting step was subjected to the image processing described above, and the thus obtained area ratio of the region having a Si concentration of 17 mass% or more in FIG. 3A1 was found to be 0.4% in area ratio.

In the rolling step, the resultant plate-shaped aluminum alloy is rolled. The rolling method is not particularly limited.

In the annealing step, the rolled workpiece is heat treated (annealed) at a range from 430°C to 570°C for a period of time ranging from 5 to 10 hours and thereby promoting the crystallization of Si. The result of EPMA measurement-image thresholding processing of the cross section of the workpiece (i.e. the sliding material) underwent such annealing step is shown in FIG. 3A2. Note that, the example of FIG. 3A2 was subjected to the annealing at a temperature of 430°C × 8 hours, and this sample was not added with Sn.

It can be seen from the result of FIG. 3A2 that the area ratio of the region having a Si concentration of 17 mass% or more has been increased as compared with that of FIG. 3A1.

The area ratio of the region having a Si concentration of 17 mass% or more in FIG. 3A2 is found to be 6.4% in area ratio. In this specification, a region whose Si concentration after annealing is 17 mass% or more is referred to as a Si-rich region.

This Si-rich region is a region whose Si concentration that is observed by the EPMA analysis is 17 mass% or more. As this Si-rich region, a Si region that contains Al is also included, in addition to a Si phase in the eutectic system.

FIG. 3B2 shows a state of a sample added with Sn at a concentration of 3 mass%. Other conditions such as annealing conditions are the same as those in FIG. 3A2. In FIG. 3B2, the area ratio of the region having a Si concentration of 17 mass% or more is 8.3% in area ratio.

Note that, FIG. 3B1 shows a state before annealing of a sample added with Sn at a concentration of 3 mass%.

In FIG. 3B1, the area ratio of the region having a Si concentration of 17 mass% or more is 0.6% in area ratio.

It can be seen from the results of FIGS. 3A1 to 3B2 that addition of Sn increases the area ratio of the region having a Si concentration of 17 mass% or more.

Here, an evenly distribution of the Si-rich region is preferable. Such distribution is achieved by thoroughly stirring the molten metal of the aluminum alloy. This is because Si crystallized in the casting step is inevitably distributed.

The grain size in the region having a Si concentration of 17 mass% or more can be adjusted by the amount of Si added and the annealing conditions. According to the studies of the present inventors, the grain size is preferably adjusted within a range from 1 µm to 20 µm.

Hereinafter, Examples of the sliding material of the present invention are shown in Table 1. This sliding material is obtained through the casting step, the rolling step, and the annealing step described above. Any workpiece having a crack occurred in the foregoing process has not been subjected to the wear test.

The wear amounts in Table 1 were obtained as follows.

A wear test was performed in a way that a cylindrical shaft was rotated while the bottom surface of the cylindrical shaft was vertically pressed against a flat plate-shaped sliding material, and then the plate thicknesses of the sliding portions of the sliding material before and after the test were measured (at 12 locations), and the amount of change in the thickness was checked as the wear amount.

The test conditions are below.
Circumferential speed: 0.1 m/s
Surface pressure: 5 MPa (constant)
Oil type: Neutral oil
Lubrication method: Dropwise addition 20 ml/min
Oil temperature: 80°C
Specimen: plate-shaped
Test time: 5 hours
Testing shaft: S55C annealed
Testing shaft roughness: Ra0.1 target value

**[Table 1]**

| | Aluminum alloy component | | | Heat treatme nt tempera ture (8 h) | Area ratio with Si concentra tion of 17 mass% or more | Check for cracks | Amount of wear |
|---|---|---|---|---|---|---|---|
| | Al (mass%) | Si (mass%) | Sn (mass%) | (° C) | (%) | | (µm) |
| Example 1 | Remainder | 8.0 | 0.0 | 550 | 12.2 | ⊚ | 20 |
| Example 2 | Remainder | 8.0 | 0.0 | 540 | 12.4 | ⊚ | 17 |
| Example 3 | Remainder | 8.0 | 0.0 | 500 | 8.8 | ⊚ | 24 |
| Example 4 | Remainder | 8.0 | 0.0 | 430 | 5.0 | ⊚ | 30 |
| Example 5 | Remainder | 7.0 | 0.0 | 540 | 10.8 | ⊚ | 22 |
| Example 6 | Remainder | 12.6 | 0.0 | 530 | 19.5 | ⊚ | 10 |
| Comparative Example 1 | Remainder | 8.0 | 0.0 | 340 | 3.0 | ⊚ | 41 |
| Comparative Example 2 | Remainder | 8.0 | 0.0 | - | 0.4 | ⊚ | 50 |
| Comparative Example 3 | Remainder | 2.0 | 0.0 | 540 | 3.1 | ⊚ | 40 |
| Comparative Example 4 | Remainder | 13.0 | 0.0 | 530 | 14.3 | × | - |
| Example 7 | Remainder | 8.0 | 6.0 | 430 | 10.0 | ⊚ | 20 |
| Example 8 | Remainder | 8.0 | 3.0 | 540 | 14.7 | ⊚ | 17 |
| Example 9 | Remainder | 8.0 | 3.0 | 500 | 11.7 | ⊚ | 19 |
| Example 10 | Remainder | 8.0 | 3.0 | 430 | 8.3 | ⊚ | 25 |
| Example 11 | Remainder | 7.0 | 3.0 | 540 | 12.8 | ⊚ | 20 |
| Example 12 | Remainder | 12.6 | 3.0 | 540 | 23.1 | ⊚ | 5 |
| Comparative Example 5 | Remainder | 8.0 | 3.0 | 340 | 4.5 | ⊚ | 35 |
| Comparative Example 6 | Remainder | 8.0 | 3.0 | 0 | 0.6 | ⊚ | 50 |
| Comparative Example 7 | Remainder | 2.0 | 3.0 | 540 | 4.6 | ⊚ | 35 |
| Comparative Example 8 | Remainder | 13.0 | 3.0 | 540 | 23.8 | × | - |
| Example 13 | Remainder | 8.0 | 7.0 | 430 | 11.0 | ○ | 25 |
| Example 14 | Remainder | 8.0 | 8.0 | 430 | 12.0 | ○ | 28 |
| Example 15 | Remainder | 8.0 | 0 | 560 | 12.5 | ⊚ | 20 |
| Example 16 | Remainder | 8.0 | 0 | 570 | 14.0 | ⊚ | 17 |
| Example 17 | Remainder | 8.0 | 3 | 560 | 16.0 | ⊚ | 15 |
| Example 18 | Remainder | 8.0 | 3 | 570 | 18.0 | ⊚ | 11 |

The results of the crack check were rated and indicated as follows: a sample including a crack below 10 mm was rated as very good and indicated by "double circle: ⊚", a sample having a crack of from 10 mm to 50 mm was rated as good and indicated by "single circle: ∘", and a sample having a crack over 50 mm was rated as poor and indicated by "×".

From the wear test results in Table 1, the wear resistance of those having a wear amount of 30 µm or less is acknowledged as good. As a result, the addition amount of Si is preferably in a range from 7.0 to 12.6 mass% (See Example 5 and Example 6). On condition that the blending amount of Si is within the range set forth above, an excellent wear resistance is obtained even when the addition amount of Sn is 6 mass% or less (See Example 7 and Example 4).

Good wear resistance is ensured at an annealing temperature in a range from 430°C to 570°C (See Example 7, Example 18).

An excellent wear resistance is ensured when the area ratio of the Si-rich region having a Si concentration of 17 mass% or more is within a range from 5% to 23.1% in area ratio (See Example 4 and Example 12), however, according to the studies of the present inventors, it is believed that an excellent wear resistance can be obtained even when the area ratio is within a range from 5% to 25% in area ratio.

Moreover, it can be seen from the results of Examples that the area ratio of the Si-rich region having a Si concentration of 17 mass% or more can be controlled by adjusting the annealing temperature.

It can be seen that when the amount of Sn added is increased, precipitation of Si is promoted (See Example 4, Example 10 and Example 7, in each of which the annealing temperature is the same as 430°C).

Note that, when the amount of Sn added is more than 6.0 mass%, wear resistance is deteriorated, and there is a concern of cracking.

The present invention is not limited to the description of the embodiments and examples of the invention. Various modifications that can be easily conceived by those skilled in the art without departing from the scope of the claims are also included in the present invention.

## Claims

1. A sliding material comprising an aluminum alloy added with Si, the sliding material having undergone annealing for the aluminum alloy,
wherein the Si is added in an amount of from 7.0 to 12.6 mass%, and
a Si-rich region having a Si concentration of 17 mass% or more present in a field of view of observation of the aluminum alloy accounts for 5% or more in area ratio.

2. The sliding material according to claim 1, to which Sn is further added in an amount of 6 mass% or less.

3. A sliding member comprising a sliding layer comprising the sliding material according to claim 1.

4. A manufacturing method of sliding material comprising:
a preparation step of providing a molten metal of an aluminum alloy comprising Si added in an amount ranging from 7.0 to 12.6 mass%;
a casting step of casting a plate-shaped workpiece from the molten metal;
a rolling step of rolling the plate-shaped workpiece; and
an annealing step of annealing the rolled workpiece,
wherein a Si-rich region having a Si concentration of 17 mass% or more is adjusted to 5% or more in area ratio in the annealing step.

5. The manufacturing method according to claim 4, wherein a roll caster is used to form the plate-shaped workpiece in the casting step.

6. The manufacturing method according to claim 5, wherein an annealing temperature in the annealing step is in a range from 430°C to 570°C.

7. The manufacturing method according to claim 4, wherein Sn is further added in an amount of 6 mass% or less in the preparation step.

8. A manufacturing method of a sliding member, the method comprising a rolling step in which the sliding material according to claim 1 is formed into a plate shape and rolled into a back metal layer.
